# EUROPÄISCHE PATENTSCHRIFT

(11) **EP 0 622 582 B1**
(45) Veröffentlichungstag und Bekanntmachung des Hinweises auf die Patenterteilung: **29.10.1997**
(21) Anmeldenummer: 94105008.0
(22) Anmeldetag: 30.03.1994
(51) Int. Cl.: F16L 55/16, F16L 55/162

(54) **Abdichtung zwischen einem eine Leckagestelle aufweisenden Rohr und einer Hülse und Verfahren zum Herstellen der Abdichtung**
Sealing between a pipe having a leakage and a sleeve and method of manufacturing the sealing
Jonction étanche entre un tuyau ayant une fuite et un manchon et procédé pour la réalisation de la jonction étanche

(30) Priorität: 08.04.1993 DE 4311674
(43) Veröffentlichungstag der Anmeldung: 02.11.1994
(73) Patentinhaber: ABB Reaktor GmbH, D-68167 Mannheim (DE)
(72) Erfinder: Russ, Jakob, D-67354 Römerberg (DE); Majumdar, Adullah-El-Baqui, Dr., D-68165 Mannheim (DE)
(74) Vertreter: Rupprecht, Klaus, Dipl.-Ing.

(56) Entgegenhaltungen:
- EP-A- 0 360 319
- DE-A- 4 008 252

## Beschreibung

Die Erfindung betrifft eine Abdichtung zwischen einem eine Leckagestelle aufweisenden Rohr und einer koaxial zum Rohr angeordneten Hülse unter Verwendung von zwei die Leckagestelle zwischen sich aufnehmenden Ringen aus einer Formgedächtnislegierung, die nach einer Erwärmung auf eine vorgebbare Temperatur durch Ausdehnung in radialer Richtung ihre ursprüngliche Form anstreben.

Eine derartige Abdichtung ist aus der DE 40 08 252 A1 bekannt. Dort erfolgt eine hydraulische Aufweitung der Hülse zusammen mit den Ringen aus einer Formgedächtnislegierung und gegebenenfalls dem Rohr. Der auf Grund der Rückfederung nach erfolgter Aufweitung entstehende Spalt von ca. 10 µm wird durch eine Dehnungsfreisetzung der Ringe geschlossen. Die hydraulische Aufweitung kann zu unerwünschten, nicht sofort erkennbaren, Schäden an Hülse, Rohr oder Ring führen. Eine Aufweitung wird im wesentlichen nur deshalb vorgenommen, um den durch die Formgedächtnislegierung zu überbrückenden Spalt möglichst gering zu halten. Auf Grund der geringen Ringspaltbreite von ca. 1 mm zwischen Hülse und Rohr kann den dort unterzubringenden Ringen aus der Formgedächtnislegierung nur ein begrenzter Dehnungsinhalt mitgegeben werden.

Es stellt sich die Aufgabe, eine Abdichtung der eingangs genannten Art anzugeben, die ohne vorherige Aufweitung auskommt und trotzdem eine zuverlässige Dichtwirkung erzielt.

Gelöst wird diese Aufgabe erfindungsgemäß dadurch, daß jedem Ring an seiner der Leckagestelle abgewandten Seite ein weiterer Ring aus einer Formgedächtnislegierung nebengeordnet ist, daß die Ringe eines jeden nunmehr gebildeten Ringpaares durch ein im elastischen Bereich verformbares, ringförmiges Halteelement miteinander verbunden sind, daß bei dem einen Ring des Ringpaares mindestens seine Innenumfangsfläche und bei dem anderen Ring des Ringpaares zumindest seine Außenumfangsfläche vom Halteelement übergriffen sind, und daß die zwei einem Halteelement zugeordneten Ringe sich radial in gegenläufige Richtung ausdehnende Ringe sind.

Durch die in entgegengesetzten radialen Richtungen verlaufenden Ausdehnungen der Ringe eines Halteelementes wird ein Teilbereich des Halteelementes an das Rohr und ein anderer Teilbereich an die Hülse gedrückt. Das Halteelement bildet somit einen Teil der Abdichtung.

Nach einer bevorzugten Ausgestaltung ist vorgesehen, daß das ringförmige Halteelement an jedem Ende eine Ausnehmung zur Aufnahme eines Ringes aufweist, wobei die Lage des jeweiligen Ringes relativ zum Halteelement festlegbar ist.

Eine andere Ausgestaltung sieht vor, daß das ringförmige Halteelement stufenförmig ausgebildet ist, daß der Mantel der an einem Halteelement-Ende vorgesehenen Stufe die Außenumfangsfläche des einen Ringes und der Mantel der am anderen Halteelement-Ende vorgesehenen Stufe die Innenumfangsfläche des anderen Ringes übergreift, wobei die Lage des jeweiligen Ringes zum Halteelement festlegbar ist.

Die Spaltbreite zwischen dem Halteelement und dem Rohr bzw. der Hülse beträgt maximal 0,1 mm.

Der zwischen den Ringen angeordnete Teilbereich des Halteelementes erfährt auf Grund des geringen Verschiebeweges und auf Grund seiner Elastizität keine nennenswerte Belastung.

Die Erfindung betrifft auch ein Verfahren zur Herstellung der erfindungsgemäßen Abdichtung.

Das Verfahren zeichnet sich dadurch aus, daß die mit den Ringen bestückten Halteelemente auf der Hülse in der gewünschten Position arretiert werden, daß die Hülse in ihre Einbauposition gebracht wird, und daß die Ringe auf die vorgebbare Temperatur erwärmt werden, wobei ein Teilbereich des Halteelements an das Rohr und ein Teilbereich des Halteelements an die Hülse gepreßt wird.

Anhand eines Ausführungsbeispieles und der schematischen Zeichnungen Figur 1 bis 8 wird eine erfindungsgemäße Abdichtung und ein Verfahren zur Herstellung dieser Abdichtung beschrieben.

Dabei zeigt die:
- Fig. 1: eine Anordnung von Abdichtkomponenten vor dem Wirksamwerden der Abdichtung,
- Fig. 2: eine Anordnung gemäß Figur 1 nach dem Wirksamwerden der Abdichtung,
- Fig. 3: ein Halteelement für die Ausführung nach Figur 1 und 2,
- Fig. 4: eine andere Anordnung von Abdichtkomponenten vor dem Wirksamwerden der Abdichtung,
- Fig. 5: eine Anordnung gemäß Figur 4 nach dem Wirksamwerden der Abdichtung,
- Fig. 6: ein Halteelement für die Ausführung nach Figur 4 und 5 und
- Fig.7,8: eine andere Ausführung des Halteelementes nach der Figur 6.

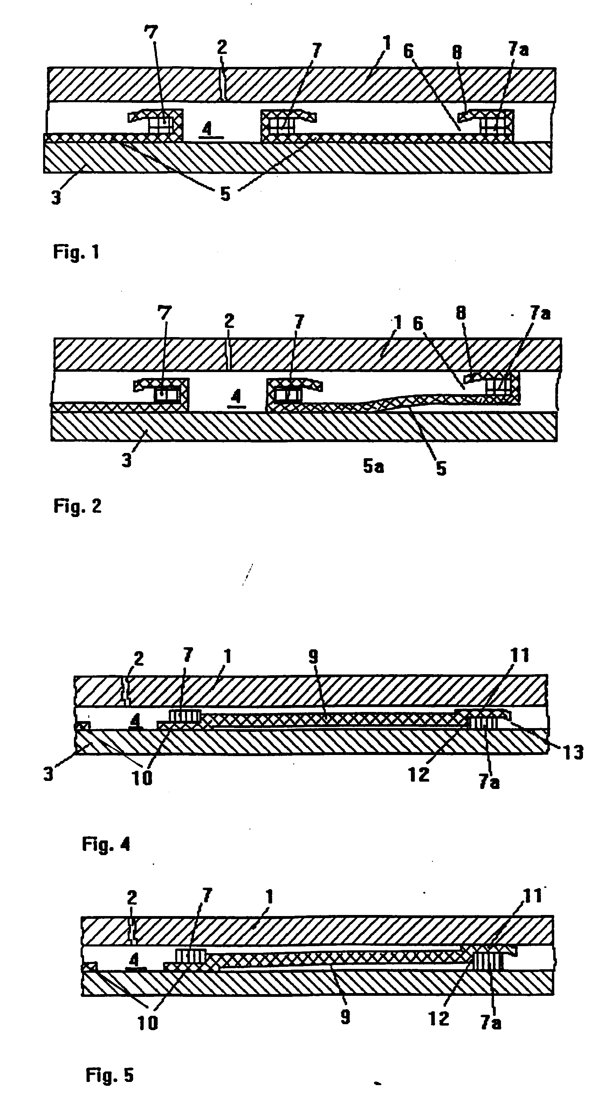

Die Figur 1 zeigt in einem Halbschnitt ein Rohr 1, das z. B. ein Wärmetauscherrohr sein kann, mit einer die Rohrwand durchsetzenden Leckagestelle 2. Eine die Leckagestelle übergreifende Hülse 3 ist koaxial zum Rohr 1 angeordnet. In einem verbleibenden Ringspalt 4 sind in Reihe, unter Einhaltung eines vorgebbaren Abstandes, zwei ringförmige Halteelemente 5 (siehe auch Figur 3) angeordnet, die die Leckagestelle 2 zwischen sich aufnehmen. In an den Enden des Halteelementes vorgesehenen Ausnehmungen 6 ist jeweils ein Ring 7, 7a aus einer Formgedächtnislegierung eingebracht. Zur Sicherung des Ringes dient eine Bördelung 8. Der Innendurchmesser des Halteelementes 5 und der Außendurchmesser der Hülse 3 bilden eine gerade noch schiebbare Preßsitzpassung, so daß die einmal eingenommene Position der Halteelemente erhalten bleibt, bis die in Figur 2 erzielte Abdichtwirkung erzielt ist.

Erreicht wird die Abdichtung nach Figur 2 dadurch, daß die zwei Ringe 7, 7a eines Halteelementes 5 aus einer Formgedächtnislegierung bestehen, die bei Erwärmung einer radial in gegenläufiger Richtung ergebende Ausdehnung der Ringe bewirkt. Die Ringe eines Halteelementes sind also bei ihrer Herstellung mit einem derartigen Dehnungsinhalt ausgestattet, das bei der Erwärmung auf die vorgebbare Temperatur von den Ringen in gegenläufiger Richtung eine radiale Kraft auf das Halteelement ausgeübt wird. Dies führt zu einer Auslenkung des Mittelteils 5a des Halteelementes 5, die jedoch keine unzulässige Biegebelastung des Halteelementes hervorruft.

Zur Erreichung einer übersichtlichen Darstellung der Abdichtung wurden die Figuren unmaßstäblich gezeichnet. Tatsächlich hat das Rohr bei einer Wanddicke von ca. 1,5 mm einen Innendurchmesser von ca. 19 mm. Die Hülse 3 hat bei einer Wanddicke von ca. 1 mm einen Außendurchmesser von ca. 17 mm, so daß der Ringspalt 4 nur ca. 1 mm aufweist. Dementsprechend weist das auch in der Figur 3 dargestellte Halteelement 5 einen Innendurchmesser von ca. 17 mm und einen Außendurchmesser von ca. 18,8 mm auf, so daß der letztendlich durch die Verformung der Formgedächtnislegierung zu überbrückende Abstand und somit auch die Auslenkung des Halteelementes ca. 0,1 mm beträgt. Ein in seiner Wandstärke ca. 0,2 mm aufweisendes Halteelement ist ca. 28 mm lang, wobei die Länge des Mittelteils 5a bereits ca. 20 mm beträgt. Die Ringe 7, 7a sind bei einer Ringstärke von ca. 0,5 mm ca. 3 mm breit.

Nach dem die mit einem in gegenläufiger radialer Richtung wirkenden Dehnungsinhalt ausgestatteten Ringe 7, 7a in Ausnehmungen 6 des in Figur 3 separat dargestellten Halteelementes 5 eingebracht und gesichert sind, erfolgt die Anpressung der Halteelement-Bereiche an das Rohr 1 bzw. an die Hülse 3 gemäß der Figur 2, so daß die gewünschte Abdichtung der Leckagestelle 2 erreicht ist.

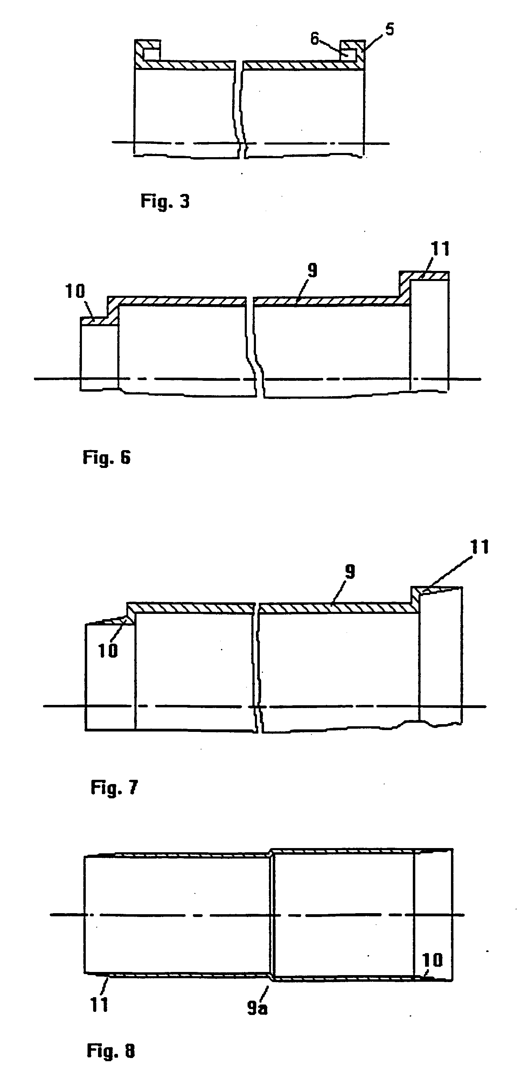

Die Figur 4 zeigt in einem Halbschnitt das die Leckagestelle 2 aufweisende Rohr 1 und die koaxial dazu erstreckte Hülse 3. Gemäß einer anderen Ausgestaltung der Abdichtung sind im Ringspalt 4 in Reihe zwei Halteelemente 9 in einer dreistufigen Ausbildung nach Figur 6 angeordnet, die die Leckagestelle 2 zwischen sich aufnehmen. Die zueinander gerichteten Stufen 10 der Halteelemente 9 übergreifen die Innenumfangsfläche des Ringes 7 und die der Leckagestelle 2 abgewandten Stufen 11 der Halteelemente 9 übergreifen die Außenumfangsfläche des Ringes 7a. Die Ringe 7, 7a liegen an einer Schulter 12 des Halteelementes an und sind mit einem dem jeweiligen Ende des Halteelementes 9 zugeordneten nasenförmigen Vorsprung 13 in ihrer Lage gesichert. Die der Hülse 3 zugewandte Innenumfangsfläche der Stufe 10 bildet mit der Hülse 3 eine gerade noch schiebbare Preßsitzverbindung, so daß eine Positionierung der Halteelemente 9 erleichert wird. Nachdem die Hülse 3 so positioniert ist, daß die zueinander gerichteten Enden der Halteelemente 9 die Leckagestelle 2 zwischen sich aufnehmen, erfolgt eine Erwärmung der Ringe 7, 7a auf eine vorgebbare Temperatur. Im Sinne des Beispiels nach Figur 1 und 2 erfahren dadurch die Ringe 7, 7a eine gegenläufige radiale Ausdehnung, so daß der zwischen Ring und Rohr bzw. zwischen Ring und Hülse angeordnete Teilbereich des Halteelementes 9 gegen die Hülse bzw. gegen das Rohr gepreßt werden. Bezüglich der maßstäblichen Abweichung wird auf die Ausführungen zu Figur 1 und 2 verwiesen.

Nach der dreistufigen Halteelement-Ausführung gemäß Figur 7 sind die Aufnahmeflächen der Stufen 10 und 11 zu ihrem freien Ende hin konisch zulaufend ausgebildet. Dadurch wird das Aufbringen der Ringe 7, 7a erleichtert. Außerdem erfolgt eine Arretierung der Ringe ohne zusätzliche nasenförmige Vorsprünge oder Bördelungen.

Eine weitere Vereinfachung bringt die Halteelementausbildung nach Figur 8. Hierbei wird auf eine Schulter zur Anlage der Ringe verzichtet, so daß eine zweistufige Ausbildung des Halteelements 9a ausreicht. Die Ringe werden allein auf Grund der konisch ausgebildeten Aufnahmeflächen gehalten.

Sind die Ringe 7, 7a gegenüber den Aufnahmeflächen in Figur 7 und 8 ebenfalls konisch ausgebildet, entsteht eine Kegelsitzverbindung. Weisen die Ringe eine zylindrische Form auf, so wird bei der Ausdehnung der Ringe eine linienförmige Berührung zwischen Ring und Halteelement stattfinden. Dieser linienförmige Kontakt wird auch zwischen Halteelement und Rohr bzw. Hülse wirksam, so daß über eine kleinere Fläche eine größere Anpreßkraft übertragen wird.

## Patentansprüche

1. Abdichtung zwischen einem eine Leckagestelle (2) aufweisenden Rohr (1) und einer koaxial zum Rohr angeordneten Hülse (3) unter Verwendung von zwei eine Leckagestelle zwischen sich aufnehmenden Ringen (7, 7a) aus einer Formgedächtnislegierung, die nach einer Erwärmung auf eine vorgebbare Temperatur durch Ausdehnung in radialer Richtung ihre ürsprüngliche Form anstreben, **dadurch gekennzeichnet**, daß jedem Ring (7) an seiner der Leckagestelle abgewandten Seite ein weiterer Ring (7a) aus einer Formgedächtnislegierung nebengeordnet ist, daß die Ringe (7, 7a) eines jeden nunmehr gebildeten Ringpaares durch ein im elastischen Bereich verformbares, ringförmiges Halteelement (5, 9) miteinander verbunden sind, daß bei dem einen Ring (7) des Ringpaares mindestens seine Innenumfangsfläche und bei dem anderen Ring (7a) des Ringpaares zumindest seine Außenumfangsfläche vom Halteelement (5, 9) übergriffen sind, und daß die zwei einem Halteelement (5, 9) zugeordneten Ringe (7, 7a) sich radial in gegenläufiger Richtung ausdehnende Ringe sind.

2. Abdichtung nach Anspruch 1, dadurch gekennzeichnet, daß das ringförmige Halteelement (5) an jedem Ende eine Ausnehmung (6) zur Aufnahme eines Ringes (7, 7a) aufweist, wobei die Lage des jeweiligen Ringes relativ zum Halteelement festlegbar ist.

3. Abdichtung nach Anspruch 1, dadurch gekennzeichnet, daß das ringförmige Halteelement (9, 9a) stufenförmig ausgebildet ist, daß der Mantel der an einem Halteelement-Ende vorgesehenen Stufe (10) die Innenumfangsfläche eines Ringes (7) und der Mantel der am anderen Halteelement-Ende vorgesehenen Stufe (11) die Außenumfangsfläche des anderen Ringes (7a) übergreift, wobei die Lage des jeweiligen Ringes zum Halteelement festlegbar ist.

4. Abdichtung nach Anspruch 3, dadurch gekennzeichnet, daß die zum jeweiligen Ring (7, 7a) zugehörige Mantelfläche des Halteelementes (9, 9a) konisch ausgebildet ist, während der Ring (7, 7a) seine zylindrische Form beibehält.

5. Abdichtung nach Anspruch 3, dadurch gekennzeichnet, daß zwischen dem Ring (7, 7a) und der zugehörigen Mantelfläche des Halteelements (9, 9a) eine Kegelverbindung hergestellt ist.

6. Abdichtung nach Anspruch 2 oder 3, dadurch gekennzeichnet, daß die Spaltbreite zwischen dem Halteelement (5, 9, 9a) und dem Rohr (1) bzw. der Hülse (3) maximal 0,1 mm beträgt.

7. Verfahren zum Herstellen der Abdichtung nach Anspruch 1, dadurch gekennzeichnet, daß die mit den Ringen (7, 7a) bestückten Halteelemente (5, 9, 9a) auf der Hülse (2) in der gewünschten Position arretiert werden, daß die Hülse (3) in ihre Einbauposition gebracht wird, und daß die Ringe (7, 7a) auf die vorgebbare Temperatur erwärmt werden, wobei ein Teilbereich des Halteelementes (5, 9, 9a) an das Rohr (1) und ein Teil des Halteelementes (5, 9, 9a) an die Hülse (3) gepreßt wird.

## Claims

1. Seal between a pipe (1) having a leakage point (2) and a sleeve (3) arranged coaxially relative to the pipe, with the use of two rings (7, 7a) consisting of a form memory alloy, which receive a leakage point between them and which, after being heated to a predeterminable temperature, strive to attain their original form by expansion in the radial direction, characterized in that each ring (7), on its side facing away from the leakage point, has arranged next to it a further ring (7a) consisting of a form memory alloy, in that the rings (7, 7a) of each pair of rings then formed are connected to one another by means of an annular holding element (5, 9) which is deformable in the elastic range, in that, in the case of the first ring (7) of the pair of rings, at least its inner circumferential surface is overlapped by the holding element (5, 9) and, in the case of the other ring (7a) of the pair of rings, at least its outer circumferential surface is overlapped by the holding element (5, 9), and in that the two rings (7, 7a) assigned to a holding element (5, 9) are rings which expand radially in opposite directions.

2. Seal according to Claim 1, characterized in that the annular holding element (5) has, at each end, a recess (6) for receiving a ring (7, 7a), the position of the respective ring relative to the holding element being capable of being fixed.

3. Seal according to Claim 1, characterized in that the annular holding element (9, 9a) is of step-like design, and in that the outer surface of the step (10) provided at one end of the holding element overlaps the inner circumferential surface of one ring (7) and the outer surface of the step (11) provided at the other end of the holding element overlaps the outer circumferential surface of the other ring (7a), the position of the respective ring relative to the holding element being capable of being fixed.

4. Seal according to Claim 3, characterized in that the outer surface, associated with the respective ring (7, 7a), of the holding element (9, 9a) is designed conically, whilst the ring (7, 7a) preserves its cylindrical shape.

5. Seal according to Claim 3, characterized in that a conical connection is made between the ring (7, 7a) and the associated outer surface of the holding element (9, 9a).

6. Seal according to Claim 2 or 3, characterized in that the gap width between the holding element (5, 9, 9a) and the pipe (1) or sleeve (3) is a maximum of 0.1 mm.

7. Method for producing the seal according to Claim 1, characterized in that the holding elements (5, 9, 9a) equipped with the rings (7, 7a) are retained on the sleeve (2) in the desired position, in that the sleeve (3) is brought into its installation position, and in that the rings (7, 7a) are heated to the predeterminable temperature, a part region of the holding element (5, 9, 9a) being pressed onto the pipe (1) and a part of the holding element (5, 9, 9a) being pressed onto the sleeve (3).

## Revendications

1. Jonction étanche entre un tube (1) présentant une fuite et un manchon (3) monté de manière coaxiale avec le tube, utilisant deux bagues (7, 7a) en un alliage à mémoire de forme qui sont disposées de part et d'autre d'un point de fuite et qui après chauffage à une température prédéterminée, reprennent leur forme d'origine par dilatation dans la direction radiale, caractérisée par le fait qu'une bague (7a) supplémentaire en un alliage à mémoire de forme est associée à chaque bague (7) , du côté de celle-ci éloigné du point de fuite, par le fait que les bagues (7, 7a) de chaque couple de bagues ainsi formé sont liées entre elles par un élément de fixation (5, 9) annulaire, déformable dans le domaine élastique, par le fait qu'en ce qui concerne l'une des bagues (7) du couple de bagues, au moins la surface périphérique intérieure de celle-ci, et en ce qui concerne l'autre bague (7a) au moins la surface périphérique extérieure de celle-ci, sont entourées par l'élément de fixation (5, 9) et par le fait que les deux bagues (7, 7a) associées à un élément de fixation (5, 9) sont des bagues qui se dilatent radialement dans des directions opposées.

2. Jonction étanche selon la revendication 1, caractérisée par le fait que l'élément de fixation (5) annulaire est pourvu à chaque extrémité d'un logement (6) pour recevoir une bague (7, 7a) la position de la bague concernée par rapport à l'élément de fixation étant déterminée de manière fixe.

3. Jonction étanche selon la revendication 1, caractérisée par le fait que l'élément de fixation (9, 9a) annulaire a une conformation en gradins, par le fait que la surface enveloppe du gradin (10) prévu à une extrémité de l'élément de fixation recouvre la surface périphérique intérieure d'une bague (7) et la surface enveloppe du gradin (11) prévu à l'autre extrémité de l'élément de fixation recouvre la surface périphérique extérieure de l'autre bagues (7a), la position de la bague concernée par rapport à l'élément de fixation étant déterminée de manière fixe.

4. Jonction étanche selon la revendication 3, caractérisée par le fait que la surface enveloppe de l'élément de fixation (9, 9a) associée à la bague (7, 7a) concernée est conique, tandis que la bague (7, 7a) conserve sa forme cylindrique.

5. Jonction étanche selon la revendication 3, caractérisée par le fait qu'un assemblage conique est réalisé entre la bague (7, 7a) et la surface enveloppe concernée de l'élément de fixation (9, 9a).

6. Jonction étanche selon la revendication 2 ou 3, caractérisée par le fait que la largeur de l'interstice entre l'élément de fixation (5, 9, 9a) et le tube (1) ou le manchon (3) est de 0,1 mm maximum.

7. Procédé pour réaliser la jonction étanche selon la revendication 1, caractérisé par le fait que l'on bloque dans la position souhaitée les éléments de fixation (5, 9, 9a) équipés des bagues (7, 7a) sur le manchon (3), par le fait que l'on amène le manchon (3) dans sa position de montage et par le fait que l'on réchauffe les bagues (7, 7a) à la température prédéterminée, une zone partielle de l'élément de fixation (5, 9, 9a) étant pressée contre le tube (1) et une zone partielle dudit élément de fixation (5, 9, 9a) étant pressée contre le manchon (3).
